# EUROPÄISCHE PATENTSCHRIFT

(11) **EP 1 418 333 B1**
(45) Veröffentlichungstag und Bekanntmachung des Hinweises auf die Patenterteilung: **07.03.2007**
(21) Anmeldenummer: 03019337.9
(22) Anmeldetag: 27.08.2003
(51) Int. Cl.: F02M 31/18, B01F 5/04

(54) **Zerstäubungsanordnung**
Atomization device
Vaporisateur

(30) Priorität: 06.11.2002 DE 10251690
(43) Veröffentlichungstag der Anmeldung: 12.05.2004
(73) Patentinhaber: ROBERT BOSCH GMBH, 70442 Stuttgart (DE)
(72) Erfinder: Hoenig, Günther, 71254 Ditzingen (DE); Miller, Frank, 74360 Ilsfeld (DE); Albrodt, Hartmut, 71732 Tamm (DE)
(74) Vertreter: Körfer, Thomas

(56) Entgegenhaltungen:
- WO-A-01/25141
- GB-A- 691 219
- GB-A- 1 485 834

## Beschreibung

### Stand der Technik

Die Erfindung geht aus von einem Reformer mit einer Zerstäubungsanordnung.

Bei brennstoffzellengestützten Transportsystemen kommen zur Gewinnung des benötigten Wasserstoffs aus kohlenwasserstoffhaltigen Kraftstoffen sog. chemische Reformer zum Einsatz.

Alle vom Reformer zum Reaktionsablauf benötigten Stoffe wie z.B. Luft, Wasser und Kraftstoff werden idealerweise dem Reformer in gasförmigem Zustand zugeführt. Da aber die Kraftstoffe , wie z.B. Methanol oder Benzin, und Wasser an Bord des Transportsystems vorzugsweise in flüssiger Form vorliegen, müssen sie erst, kurz bevor sie dem Reformer zugeführt werden, erhitzt werden, um sie zu verdampfen. Dies erfordert einen Vorverdampfer, der in der Lage ist, die entsprechenden Mengen an gasförmigem Kraftstoff und Wasserdampf zur Verfügung zu stellen, wobei meist die Abwärme des Reformers zur Verdampfung benutzt wird.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Es ist daher sinnvoll, den Kraftstoff durch eine Zerstäubungseinrichtung in feinverteilter Form in den Reformer einzubringen, wobei, bei ausreichendem Wärmeangebot, der Verdampfungsprozeß durch die hohe Oberfläche des feinverteilten Kraftstoffs verbessert wird.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zuführungsleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozeß notwendig ist, in den Reaktionsbereich des Reformers. Durch die lange Zuführungsleitung kann die Zumeßeinrichtung von thermischen Einflüssen des Reformers isoliert werden.

Nachteilig bei den aus der obengenannten Druckschrift bekannten Vorrichtungen ist insbesondere, daß durch die einfache Konstruktion der Düse und die Anordnung der Prallbleche eine gezielte Eindosierung von Kraftstoff, beispielsweise in Bereiche des Reformers mit großem Wärmeangebot, nur unzureichend möglich ist. Dies führt zu einem relativ großen Raumbedarf durch die Notwendigkeit einer langen und voluminösen Verdampfungsstrecke.

Außerdem ergeben sich im Kaltstartbetrieb Probleme, da sich lange und voluminöse Verdampfungsstrecken nur langsam aufheizen und zudem relativ viel Wärme ungenutzt abgeben. Durch die in der US 3,971,841 offenbarten Anordnungen von Düse und Prallblechen ist es insbesondere nicht möglich, eine Hohlzylinderinnenfläche gleichmäßig mit Kraftstoff zu benetzen, dabei bestimmte Flächen des Hohlzylinders von der Benetzung mit Kraftstoff auszunehmen oder die Menge des eindosierten Kraftstoffs der Verteilung des Wärmeangebots im Zumeßraum anzupassen. Auch die Form der durch den Zumeßvorgang entstehenden Kraftstoffwolke kann nur unzureichend beeinflußt werden.

Weiterhin ist aus der GB 1 485 834 ein Wasserstoffgenerator bekannt, bei dem lange Zuleitungen von einer Pumpe oder einem Kompressor vorgesehen sind. Die GB 691 219 offenbart einen Flüssigbrennstoffverbrennungsapparat mit einem Flüssigbrennstoffatomisator.

### Vorteile der Erfindung

Die erfindungsgemäße Zerstäubungsanordnung mit den kennzeichnenden Merkmalen des Hauptanspruchs hat demgegenüber den Vorteil, daß durch den Einsatz eines porösen oder mit Bohrungen versehenen Zerstäubungszylinders mit geeigneter Gestaltung der Bohrungen der Kraftstoff entsprechend dem im Zumeßraum herrschenden Wärmeangebot und der Geometrie des Zumeßraumes fein zerstäubt und homogen verteilt eingebracht werden kann.

Durch die in den Unteransprüchen aufgeführten Maßnahmen sind vorteilhafte Weiterentwicklungen der im Hauptanspruch angegebenen Zerstäubungsanordnung möglich.

Vorteilhafterweise ist der Zerstäubungszylinder mittels einer Verschraubung an dem Verlängerungsrohr montiert. Dadurch kann der Zerstäubungszylinder beliebig ausgetauscht werden.

Eine einfach Möglichkeit der Verbindung ist durch Schweißen, Löten oder ähnliche Verfahren gegeben.

Weiterhin ist von Vorteil, daß der Zerstäubungszylinder entweder Bohrungen, welche beispielsweise mittels Laserbohren angebracht werden können, oder eine allgemeine poröse Struktur aufweisen kann, indem er z. B. aus einem gesinterten Material hergestellt ist.

Ein Deckel am abströmseitigen Ende des Zerstäubungszylinders sorgt in vorteilhafter Weise dafür, daß das Kraftstoff-Luft-Gemisch in fein zerstäubter Form homogen in den Zumeßraum abgegeben wird.

### Zeichnung

Ein Ausführungsbeispiel der Erfindung ist in der Zeichnung vereinfacht dargestellt und in der nachfolgenden Beschreibung näher erläutert. Es zeigen:

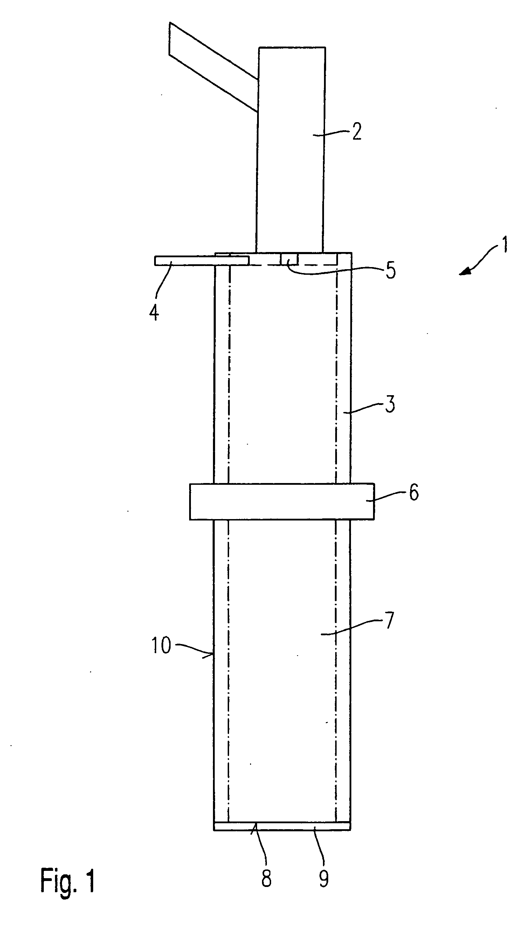

- Fig. 1: eine schematische Schnittdarstellung eines Ausführungsbeispiels einer erfindungsgemäßen Zerstäubungsanordnung in einer Gesamtansicht.

### Beschreibung des Ausführungsbeispiels

Nachfolgend wird ein Ausführungsbeispiel der Erfindung unter Bezugnahme auf die Zeichnung beispielhaft beschrieben.

Das nachfolgend beschriebene Ausführungsbeispiele einer erfindungsgemäß ausgestalteten Zerstäubungsanordnung 1 ermöglicht eine einfache Dosierung und Zerstäubung in heißer Atmosphäre bei robuster Konstruktion, Anwendung in unterschiedlichen räumlichen Konstellationen und Einsatz von Standard-Niederdruck-Brennstoffeinspritzventilen.

Das in Fig. 1 schematisiert in einer Gesamtdarstellung gezeigte Ausführungsbeispiel der erfindungsgemäßen Zerstäubungsanordnung 1 ist in der Form einer Zerstäubungsanordnung 1 für die Verwendung von Niederdruck-Brennstoffeinspritzventilen 2 ausgeführt. Die Zerstäubungsanordnung 1 eignet sich insbesondere zum Eintrag und zur Zerstäubung von Kraftstoff in einen nicht dargestellten chemischen Reformer zur Gewinnung von Wasserstoff.

Die erfindungsgemäße Zerstäubungsanordnung 1 weist ein in diesem Ausführungsbeispiel hohlzylindrisches Verlängerungsrohr 3 mit einer Dosieröffnung 5 auf. Seitlich kann unter einem beliebigen Winkel eine Luftzufuhr 4 angebracht sein, welche im Bereich der Dosieröffnung 5 dem eingespritzten Kraftstoff Luft oder Restgas zuführt.

Das Verlängerungsrohr 3 ist im Ausführungsbeispiel beispielsweise mittels einer Verschraubung 6 durch einen porösen Zerstäubungszylinder 7 verlängert. Die Verbindung zwischen dem Verlängerungsrohr 3 und dem Zerstäubungszylinder 7 kann dabei auch mittels Schweißen, insbesondere Laserschweißen, oder Löten oder andere geeignete Verfahren hergestellt werden. Insbesondere die Verbindung durch die Verschraubung 6 ist einfach und zuverlässig und zudem reversibel, d. h. die Verbindung kann leicht gelöst und eine andere Komponente, beispielsweise ein längeres oder kürzeres Zerstäubungsrohr 7, kann angeschraubt werden.

Der Zerstäubungszylinder 7 weist entsprechend seiner Funktion eine Vielzahl von Poren und/oder Bohrungen auf, durch welche das Kraftstoff-Luft-Gemisch in weitere, nicht dargestellte Komponenten der Brennstoffzelle eingebracht wird. Die Poren und/oder Bohrungen können dabei einerseits mittels geeigneter Methoden, wie z. B. Laserbohren, in das Material des Zerstäubungszylinders 7 eingebracht sein oder bedingt durch die Porosität des Materials des Zerstäubungszylinders 7 in großer Anzahl vorhanden sein. Für letzteres ist dabei insbesondere Sinterbronze geeignet.

Vorteilhaft ist dabei, daß eine gleichmäßige Zerstäubung in die das Zerstäubungsrohr 7 umgebende, zumeist hohlzylindrische Komponente durch kleinste Poren/Bohrungen realisierbar ist. Der Durchmesser der Poren bzw. der Bohrungen kann entsprechend ausgelegt werden, ebenso wie der Innen- und Außendurchmesser des Zerstäubungszylinders 7.

Der Zerstäubungszylinder 7 ist an seiner dem Brennstoffeinspritzventil 2 abgewandten Stirnseite 8 durch einen Deckel 9 abgeschlossen, welcher beispielsweise mittels Schweißen, Löten oder einem anderen geeigneten Verfahren am Zerstäubungszylinder 7 fixiert ist. Dadurch wird das Gemisch ausschließlich über die Seiten 10 des Zerstäubungs-zylinders 7 abgegeben, wodurch eine gleichmäßige Verteilung in der zumeist ebenfalls rohrförmigen Komponente, in welche das Gemisch abgegeben wird, erreicht wird.

Durch eine geeignete Umgestaltung des Zerstäubungszylinders 7 sowie der Porosität des Zerstäubungszylinders 7 kann auch in andere Querschnitte effektiv zerstäubt werden.

Die Erfindung ist nicht auf das beschriebene Ausführungsbeispiel beschränkt und ist für beliebige andere Zerstäubungsanordnungen nach Ansprüche 1 - 9 anwendbar.

## Patentansprüche

1. Reformer mit einer Zerstäubungsanordnung (1) für Kraftstoffe, mit einem Brennstoffeinspritzventil (2), einem Verlängerungsrohr (3) und zumindest einer Dosieröffnung (5), wobei das Verlängerungsrohr (3) mit einem Zerstäubungszylinder (7) verbunden ist, **dadurch gekennzeichnet, daß** der Zerstäubungszylinder (7) Bohrungen aufweist oder porös ausgebildet ist.

2. Reformer mit Zerstäubungsanordnung nach Anspruch 1,
**dadurch gekennzeichnet,**
**daß** das Verlängerungsrohr (3) und der Zerstäubungszylinder (7) hohlzylindrisch ausgebildet sind.

3. Reformer mit Zerstäubungsanordnung nach Anspruch 1 oder 2,
**dadurch gekennzeichnet,**
**daß** die Bohrungen mittels Laserbohrens in den Zerstäubungszylinder (7) eingebracht sind.

4. Reformer mit Zerstäubungsanordnung nach einem der vorhergehenden Ansprüche,
**dadurch gekennzeichnet,**
**daß** die Bohrungen unterschiedliche Durchmesser aufweisen.

5. Reformer mit Zerstäubungsanordnung nach einem der vorhergehenden Ansprüche,
**dadurch gekennzeichnet,**
**daß** der Zerstäubungszylinder (7) aus Sinterbronze hergestellt ist.

6. Reformer mit Zerstäubungsanordnung nach einem der Ansprüche 1 bis 5,
**dadurch gekennzeichnet,**
**daß** der Zerstäubungszylinder (7) mittels einer Verschraubung (6) an dem Verlängerungsrohr (3) fixiert ist.

7. Reformer mit Zerstäubungsanordnung nach einem der Ansprüche 1 bis 5,
**dadurch gekennzeichnet,**
**daß** der Zerstäubungszylinder (7) mittels Schweißen oder Löten an dem Verlängerungsrohr (3) fixiert ist.

8. Reformer mit Zerstäubungsanordnung nach einem der Ansprüche 1 bis 7,
**dadurch gekennzeichnet,**
**daß** der Zerstäubungszylinder (7) durch einen Deckel (9) an einer Stirnseite (8) abgeschlossen ist.

9. Reformer mit Zerstäubungsanordnung nach einem der Ansprüche 1 bis 5,
**dadurch gekennzeichnet,**
**daß** der Deckel (9) mittels Schweißen oder Löten an dem Zerstäubungszylinder (7) fixiert ist.

## Claims

1. Reformer with an atomization arrangement (1) for fuels, with a fuel injection valve (2), an extension tube (3) and at least one metering orifice (5), the extension tube (3) being connected to an atomization cylinder (7), **characterized in that** the atomization cylinder (7) has bores or is of porous design.

2. Reformer with an atomization arrangement according to Claim 1,
**characterized**
**in that** the extension tube (3) and the atomization cylinder (7) are of hollow-cylindrical design.

3. Reformer with an atomization arrangement according to Claim 1 or 2,
**characterized**
**in that** the bores are introduced into the atomization cylinder (7) by means of laser drilling.

4. Reformer with an atomization arrangement according to one of the preceding claims,
**characterized**
**in that** the bores have different diameters.

5. Reformer with an atomization arrangement according to one of the preceding claims,
**characterized**
**in that** the atomization cylinder (7) is produced from sintered bronze.

6. Reformer with an atomization arrangement according to one of Claims 1 to 5,
**characterized**
**in that** the atomization cylinder (7) is fixed to the extension tube (3) by means of a screw connection (6).

7. Reformer with an atomization arrangement according to one of Claims 1 to 5,
**characterized**
**in that** the atomization cylinder (7) is fixed to the extension tube (3) by means of welding or soldering.

8. Reformer with an atomization arrangement according to one of Claims 1 to 7,
**characterized**
**in that** the atomization cylinder (7) is closed off on one end face (8) by means of a cover (9) .

9. Reformer with an atomization arrangement according to one of Claims 1 to 5,
**characterized**
**in that** the cover (9) is fixed to the atomization cylinder (7) by means of welding or soldering.

## Revendications

1. Reformeur comprenant un vaporisateur (1) pour des carburants, un injecteur de carburant (2), un tube de rallonge (3) et au moins une ouverture de dosage (5), le tube de rallonge (3) étant relié à un cylindre de vaporisation (7),
**caractérisé en ce que**
le cylindre de vaporisation (7) présente des perçages ou est poreux.

2. Reformeur avec vaporisateur selon la revendication 1,
**caractérisé en ce que**
le tube de rallonge (3) et le cylindre de vaporisation (7) possèdent une forme cylindrique creuse.

3. Reformeur avec vaporisateur selon la revendication 1 ou 2,
**caractérisé en ce que**
les perçages sont pratiqués dans le cylindre de vaporisation (7) au moyen d'un perçage au laser.

4. Reformeur avec vaporisateur selon l'une des revendications précédentes,
**caractérisé en ce que**
les perçages présentent différents diamètres.

5. Reformeur avec vaporisateur selon l'une des revendications précédentes,
**caractérisé en ce que**
le cylindre de vaporisation (7) est fabriqué en bronze fritté.

6. Reformeur avec vaporisateur selon l'une des revendications 1 à 5,
**caractérisé en ce que**
le cylindre de vaporisation (7) est fixé au tube de rallonge (3) au moyen d'un vissage (6).

7. Reformeur avec vaporisateur selon l'une des revendications 1 à 5,
**caractérisé en ce que**
le cylindre de vaporisation (7) est fixé au tube de rallonge (3) par soudage ou brasage.

8. Reformeur avec vaporisateur selon l'une des revendications 1 à 7,
**caractérisé en ce que**
le cylindre de vaporisation (7) est fermé au niveau d'une face frontale (8) par un couvercle (9).

9. Reformeur avec vaporisateur selon l'une des revendications 1 à 5,
**caractérisé en ce que**
le couvercle (9) est fixé au cylindre de vaporisation (7) par soudage ou par brasage.
